# EUROPEAN PATENT APPLICATION

(11) **EP 1 923 781 A1**
(43) Date of publication of application: **21.05.2008**
(21) Application number: 06123986.9
(22) Date of filing: 14.11.2006
(51) Int. Cl.: G06F 9/44, G06F 5/10

(54) **Method and device for sequentially processing a plurality of programs**

(71) Applicant: Thomson Holding Germany GmbH & Co. OHG, 30625 Hannover (DE)
(72) Inventor: Borsum, Malte, 30655 Hannover (DE); Georgi, Marco, 30855 Langenhagen (DE); Kluger, Andreas, 30457, Hannover (DE)
(74) Representative: Rittner, Karsten

(57) **Abstract**

The invention relates to a method and a device for sequentially processing a plurality of programs on a hardware processing unit. The sequence order of the plurality of programs is not deterministic, and the programs require individual amounts of process data. A device for sequentially processing such programs comprises means (61) for providing a command, means (62) for determining the required processing data according to the command, means (63) for providing the determined processing data, first buffer (CB) for buffering the provided command, second buffer (DB) for buffering the provided processing data, means (68) for determining and reading a program corresponding to the buffered command, means (BM) for retrieving from the second buffer the processing data that correspond to the command, and means (69) for processing the processing data according to said program. The second buffer (DB) is a ring buffer and the means (BM) for retrieving the processing data comprises means (VPA) for associating virtual buffer read addresses received from the processing unit (69) with physical read addresses.

## Description

### Field of the invention

This invention relates to a method and a device for sequentially processing a plurality of programs on a hardware processing unit, wherein the programs may have different lengths and require individual amounts of processing data.

### Background

A program is commonly understood as a sequence of instructions to be executed by a processing unit, wherein the individual instructions require input data and provide output data. The sequence of instructions is called program data, and the input data and output data are called process data or processing data. The call for a program to execute on the processing unit is controlled by a command.

Typically, a program that runs on a processing unit that is capable of processing data and loading new data in the same cycle needs some initial cycles at each program call to load the required process data from a large memory prior to processing. Therefore the processing unit needs to wait for the process data to be loaded. The more complex the processing is, the more process data sets are needed and the more cycles are lost.

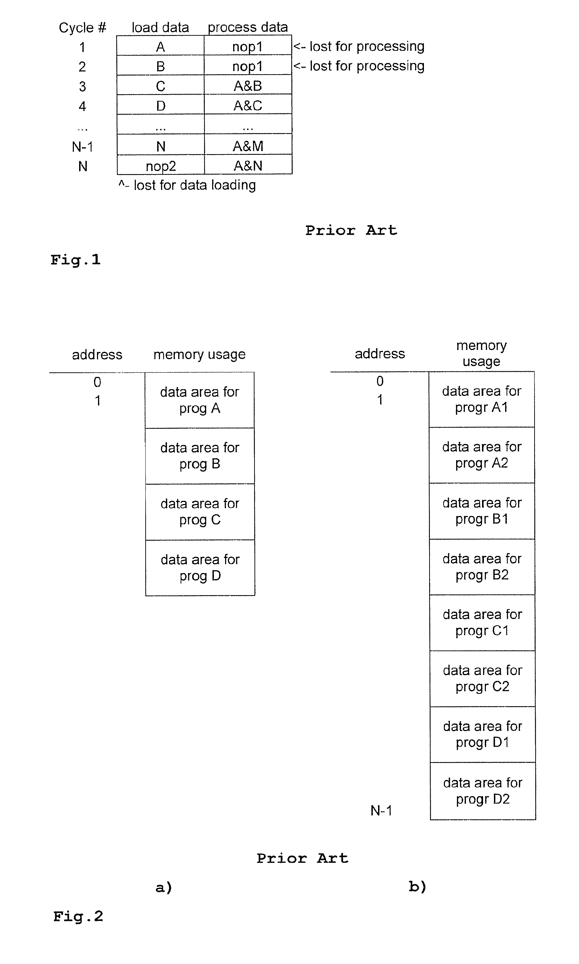

Fig.1 shows execution cycles of a typical conventional program. For example, in cycle #3 the processing data A,B are processed to obtain a result A&B. This requires the processing data A,B to be previously loaded. In the case shown in Fig.1 two initial cycles #1,#2 are necessary, during which the processing unit performs no operation nop1. Similarly, at the end of a program there are no new data loaded, because at least the last cycle is used only for processing. Thus, at the last cycle the data load unit performs no operation nop2 and remains idle.

For avoiding these idle cycles, the processing data must be provided in advance, before program execution. Usually the processing data A,B are copied from a large memory into a local buffer before the program is executed. A command that calls the program may provide also information about a processing data block to be loaded. The output of the processing may but needs not comprise a modification and write-back of the data block. Since different programs may require different processing data to be loaded, the amount of processing data per program can vary.

Process data to be loaded and processed by a data processing unit is commonly stored into a local buffer. This kind of buffer has generally one port towards the processing unit for loading and modifying the data and another port towards a data management unit that provides the process data before the program is started. Various approaches are known to optimise this type of buffer such that during execution of a current program also the process data of the next program can already be stored to this buffer. One solution is to use separate buffers, or separate regions in a common buffer, for the current and the next program. This approach is known as "ping-pong buffer".

A conventional processing data memory structure for this case is shown in Fig.2 a). Exemplarily, the processing data memory has pre-allocated areas for processing data for four different programs A,B,C,D to be loaded. However, different programs require different amounts of processing data; thus, the amount of required memory area for a following program is not pre-determined because the order of the programs is arbitrary. When a program A is finished, the respective data area in the memory is de-allocated. If the next program to be loaded is e.g. a program B, which requires more processing data, the memory area that was de-allocated is not sufficient for storing the process data for program B, so that a separate data area is necessary where processing data for program B can be loaded. Thus, separate memory areas need to be pre-allocated for each possible program type. But it is also possible that another program of the same type A follows. One solution to this problem is shown in Fig.2 b), where for every possible type of programs A-D two blocks are pre-allocated. Thus the process data of the next program, for example B2, can already be loaded in the secondary memory area before a first program B1 of type B terminates.

Further, if different program types with defined individual buffering requirements exist, the correct buffer for the next program type must be determined. This requires additional time, which is a problem particularly if the current program is very short and therefore processing data for the subsequent program are required very soon.

More separate buffers may be provided, e.g. for the next five programs. But if the lengths of process data of possible programs vary strongly, each buffer must have the maximum possible length. Thus, average buffer utilization is poor. Particularly if the process data are provided via a hardware buffer to the processing unit, it is desirable to minimize the size of the buffer, and thus hardware costs. And if the sequence of commands is not predetermined a separate control is necessary for selecting a buffer.

Due to the above-described buffering, conventional programs may use indirect addressing, wherein symbolic addresses of particular processing data are translated into physical buffer addresses, which however requires a separate step and complicates the program verification.

### Summary of the Invention

The present invention provides a method and a device for flexible buffer utilization within an architecture usable for sequentially executing different programs in nondeterministic order that require different process data of variable length. Further, the invention provides a method and a device for enabling programs to easily access such process data.

In principle, a device for sequentially processing such programs comprises means for providing commands, means for providing program instructions according to said commands, first buffer for buffering the commands or the related program instructions, means for determining and means for providing the required process data, second buffer for buffering the process data, means for reading a command from the first buffer, means for reading from the second buffer the process data corresponding to the command that was read, and means for processing the process data using said program instructions, wherein the second buffer for the process data is a ring buffer and allows accessing the process data according to relative virtual addresses provided by the command.

In one embodiment, the means for retrieving (from said second buffer the processing data that correspond to the command) retrieves an initial portion of said processing data before the first instruction corresponding to the read command arrives at the processing unit, thus pre-loading the required processing data so that the next program needs not actually request them.

The present invention uses a ring buffer to store the process data, which is usable as a conventional ring buffer from the write side (data input) and has a virtual addressing unit at the read side (data output). The virtual addressing unit maps virtual addresses to real addresses, i.e. a read pointer, wherein always a fixed address, for example zero, is mapped to the physical start address of a current program. Thus, the process data of a currently processed program starts always at the (virtual) fixed address, which means that the programs that access these process data can include fixed addresses. This eliminates the need to perform indirect addressing, and thus saves at least one address calculation command per data access. Furthermore it is much easier to develop programs with fixed process data addresses.

Further, the process data for the subsequent program starts always immediately after the end of the process data of the currently processed program. This has the advantage that the storage location for the initial process data for the next program can be easily determined and pre-loaded, independent from the length of the process data of the current program.

According to one aspect of the invention, a method for sequentially processing a plurality of programs on a hardware processing unit, wherein the sequence order of the plurality of programs is not deterministic and wherein the programs require individual processing data, comprises the steps of providing a command identifying a program (including sequence order and indication of required process data) of the plurality of programs,
determining for the identified program the required processing data according to the command, providing the determined processing data,
buffering the command in a first buffer, e.g. for scheduling the commands for the hardware processing unit, buffering the provided processing data in a second buffer, e.g. for scheduling the processing data corresponding to the scheduled commands,
reading from the first buffer the command to be processed, determining and reading a program (i.e. the instructions) corresponding to the read command,
reading from the second buffer the processing data that correspond to the read command, or to its instructions, and processing the read processing data according to said program (i.e. the instructions),
wherein the second buffer for the processing data is a ring buffer and wherein the step of reading the processing data comprises the steps of
associating virtual buffer read addresses received from the processing unit with physical buffer read addresses,
wherein the program provides the virtual buffer read addresses as direct addresses, and
applying the physical buffer read addresses to the second buffer.

In one embodiment, the step of associating virtual buffer read addresses with physical buffer read addresses includes that a current initial physical buffer read address (preferably the physical address of the first process data word for the current program) is associated with a defined fixed virtual buffer read address, e.g. by mapping the physical processing data start address to a fixed virtual address of #0 (zero), and the processing data are addressed relative to the fixed virtual read address.

Advantageously the step of associating physical buffer read addresses with virtual read addresses is done preferably by a hardware means or at least hardware supported, so that no additional processing step is required for the program.

According to one aspect of the invention, a device for sequentially processing a plurality of programs on a hardware processing unit, wherein the sequence order of the plurality of programs is not deterministic and wherein the programs require individual amounts of processing data, comprises means for providing a command identifying a program of the plurality of programs,
means for determining for the identified program the required processing data according to the command, means for providing the determined processing data,
first buffer for buffering/scheduling the commands for the hardware processing unit,
second buffer for scheduling the determined processing data corresponding to the scheduled command,
means for reading from the first buffer a command to be processed,
means for determining and reading a program (i.e. the instructions) corresponding to the read command,
means for reading from the second buffer the processing data that correspond to the read command, or to its program instructions, and means for processing the read processing data according to said program,
wherein the second buffer for the processing data is a ring buffer and wherein the means for reading the processing data from the second buffer comprises
means for associating virtual buffer read addresses received from the processing unit and provided as direct addresses by the program with physical read addresses,
wherein the physical buffer read addresses are applied to the second buffer.

It is however possible to store in the first buffer the program instructions instead of commands. But since the commands are shorter, it is usually advantageous to store the commands, and translate them into program instructions later. This requires less buffer space.

Advantageously the means for associating physical buffer read addresses with virtual read addresses is a hardware means or at least hardware supported, so that it requires no additional processing step.

One advantage of the invention is that, due to the mapping, the process data for the currently running program always start at the same read address. Thus, the programs can employ direct addressing, which can be performed in a single clock cycle, as opposed to the conventional indirect addressing which requires handling of pointers and software mapping of addresses.

Another advantage is that in one embodiment of the invention the physical address for writing the processing data that are required for the next program can be easily determined, since it is the address following the last address used for the current program. Therefore a simple FIFO (first-in-first-out) write mechanism can be used for writing data to the second buffer which is used for processing data.

In one embodiment, the commands are provided in a nondeterministic order by a pre-processing unit.

The means for associating physical buffer read addresses with virtual read addresses may add or subtract a value to the virtual read addresses provided by the program data to obtain the physical buffer read addresses, wherein the value is constant for each call of a program (i.e. it is set only once during the execution of a program, at the beginning) and can be derived from the physical buffer read address of the first read value of the program. The constant value can be a base address that is added to or subtracted from the virtual address, and a modulo operation may be performed on the result for obtaining an address within the physical address range of the buffer. For example if the physical read address of the first read value is 0x01e (30_{dec}), then this value can be stored and added to each virtual read address that the program provides. In one embodiment of the invention, the base address is provided by the command coming from the command buffer. Thus the program uses direct addressing, but the addresses are relative. The value can also be determined from the first physical buffer write address at the write side of the buffer, and then be stored until the program is executed.

The different programs may exemplarily include image processing operations performed on different image blocks and/or block sizes.

Advantageous embodiments of the invention are disclosed in the dependent claims, the following description and the figures.

### Brief description of the drawings

Exemplary embodiments of the invention are described with reference to the accompanying drawings, which show in
Fig.1 processing cycles in a conventional device;
Fig.2 allocation of separate data areas for four different program types with a) one instance and b) two instances each;
Fig.3 a diagram of the data structure;
Fig.4 allocation of data in a ring buffer;
Fig.5 an exemplary hardware architecture of a data processing device using a ring buffer;
Fig.6 a block diagram of a ring buffer with relative read addressing; and
Fig.7 an exemplary structure of programs to be executed.

### Detailed description of the invention

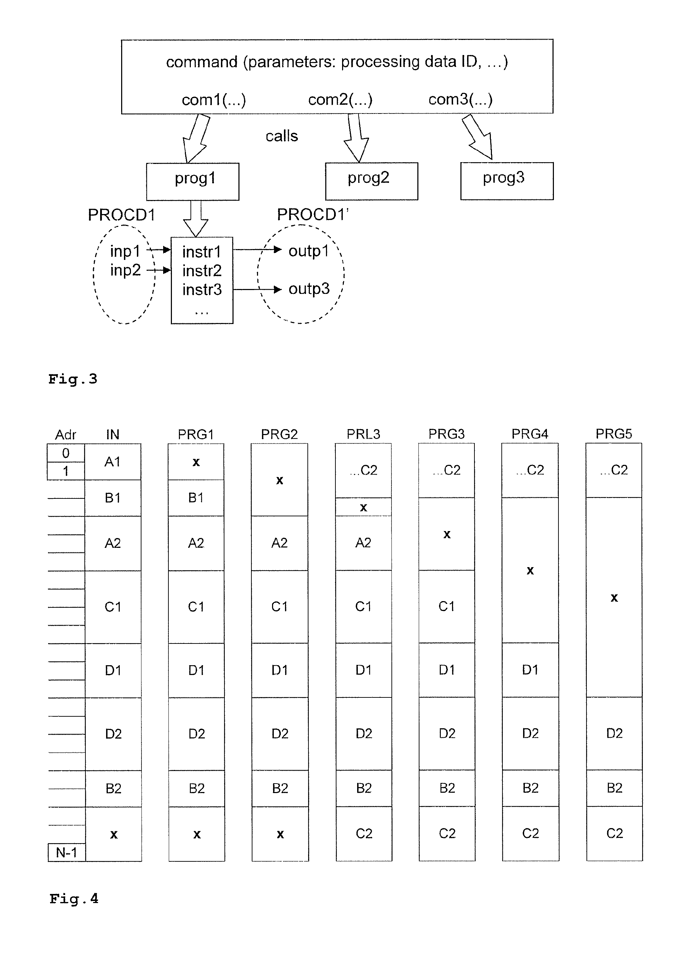

Fig.3 shows the general data structure, including commands that have parameters and refer to programs. E.g. a first command com1() calls a first program prog1 (e.g. defines a start address as an entry point), which consists of instructions instr1, instr2, instr3. Different types of instructions exist: some require input data, some provide output data and some require input data and provide output data. The input data inp1, inp2 come from a processing data block PROCD1 that serves as input for the current program prog1, and (some of) the output data outp1, outp3 may constitute an output data block PROCD1', which may but needs not be identical (in terms of data structure or data amount) with the input data block PROCD1. The output can also consist of all kinds of calculation results such as e.g. checksums, flags being set etc.

Fig.4 shows different phases of the storing of processing data in a ring buffer according to the invention. In an initial state IN the buffer is loaded with processing data A1, B1, A2, C1, D1, D2, B2 of seven different programs, which are scheduled to be executed. Processing data for as many as possible programs are loaded, which is advantageous since loading may take longer than program execution. Exemplarily, loading the processing data for a program may take 20 cycles, while the program is executed in only 10 cycles. The order and the types of the programs may have been determined by a scheduler. A small amount of free buffer area x remains.

After some time, in state PRG1, one program corresponding to A1 terminates. Therefore the memory area A1 that its processing data allocated can be released. Thanks to the ring structure of the buffer, a contiguous free memory area x results from the unused end of the buffer and the newly released area. However, the free memory area x is not large enough for storing the processing data of the next program provided by a scheduler. This next program can be any of the possible programs, and the length of its processing data may vary correspondingly. In a next step PRG2, a further program corresponding to B1 terminates and the corresponding buffer area is de-allocated and added to the free memory area x. Now the free memory area is large enough to load in a next step PRL3 the processing data C2 of the next program. Due to the ring structure of the buffer, the memory area at the highest addresses and at the lowest addresses can be handled as a contiguous area. Thus, a processing data block may start near the (physical) end of the buffer, and end near its beginning, as shown for C2. After the loading step PRL3, the program C2 is marked to be ready for execution (e.g. in a program dispatcher).

Similarly, while other running programs terminate, the free memory area block x increases and can be re-allocated for new programs. The minimum required buffer space depends on the type of the next program.

In one embodiment, the programs are executed in the same order in which their processing data are loaded. In another embodiment however using an extended scheduler it may be possible that programs are called in a different order. So it may happen that loading must wait because no contiguous free memory area is available (e.g. if in state PRG1 of Fig.4 the next memory area to be released is A2 instead of B1). However, usually the buffer length can be calculated to be sufficient for all cases. In one embodiment, loading the next processing data is only performed if the contiguous free buffer area after the data for the last loaded program is sufficient. However, in another embodiment it is possible to load processing data into any free buffer area of sufficient size. In this case, a more sophisticated mechanism for keeping track of free buffer area is employed. Advantageously, de-allocated successive buffer areas of different programs add up, and can be used for any type of next program.

Advantageously, in architectures where any next processing data can be loaded already during the execution of a previous program, the total amount of required buffering space is smaller than in prior art architectures. Further advantages are that the address handling is easier both for hardware and software, that the overall hardware utilisation is enhanced, and that therefore more processing power can be achieved, or the operating frequency can be lowered.

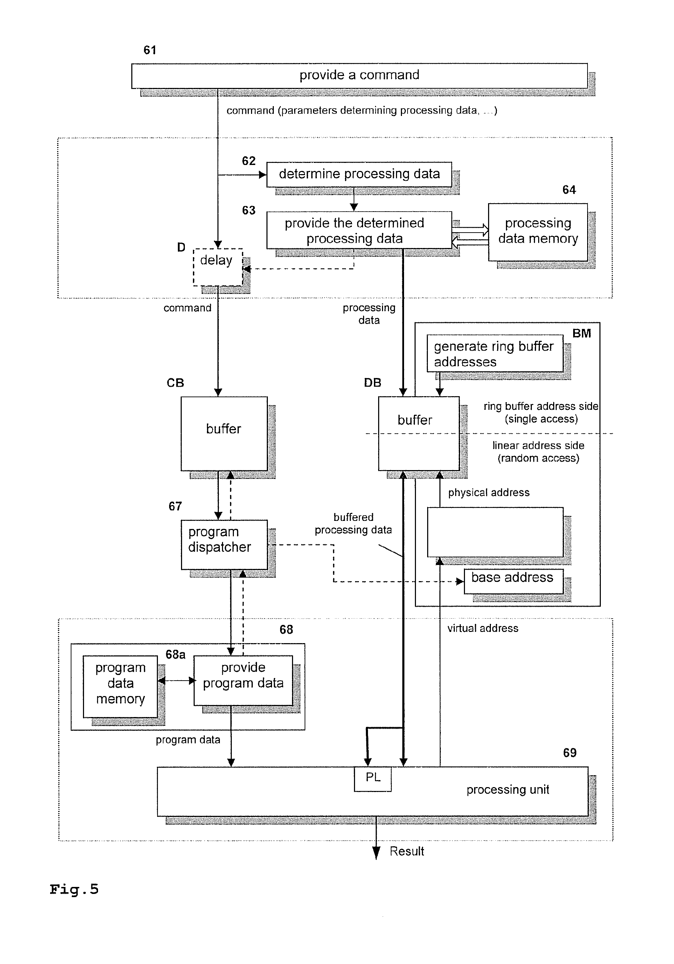

Fig.5 shows an exemplary architecture using a ring buffer according to the invention. A command is provided 61 (or received) together with parameters for executing the command. One of the parameters is an identifier for the required processing data block, e.g. an address in a large external memory 64. After determining 62 the processing data block identifier from the list of parameters, the respective processing data block is read 63 from a memory 64 and provided to the processing data buffer DB, which is a ring buffer according to the invention. The ring buffer stores the data block at the next free location as described above.

When the processing data are stored in the ring buffer DB, the corresponding command is ready for being executed. It may be buffered in a delay buffer D while its processing data are loaded into the ring buffer, as described above. Then it is stored in a command buffer CB, from which it is read 67 shortly before its execution is due. Next, the program identified by the command is determined, and its program data (i.e. the instructions) are provided 68 to a processing unit 69. The means 68 for providing the program data may include a program data memory 68a from which the program data are read. Simultaneously, the base address parameter is provided to the ring buffer address handler BM, where it will be used to implement the virtual memory mapping for the next program.

Because a next program will need processing data for its first instructions, the real processing may stall for the very first instructions (as shown in Fig. 1). To circumvent this, the last program that runs directly before can pre-load the first data for the next program into registers that are currently not used or into special pre-load registers PL. It is in the scope of the program developer to select appropriate processing data to pre-load to ensure useful processing in the next program. In the case the next processing data is not present when the last program ends, it is not possible to pre-load any data. Therefore this exception has to be handled by the program dispatcher 67 by starting the next program with another start address. Each program is programmed with two start addresses, one for the normal case where pre-loading was successful (e.g. #3 in Fig. 1) and the other one for the case pre-loading failed (e.g. #1 in Fig. 1). Note that the term pre-loading is used to indicate that processing data are transferred from the data buffer DB to the processing unit 69 before the execution of the corresponding program starts. Therefore the processing unit needs not to wait for the processing data to be available when executing a program. This is particularly advantageous in cases where all possible programs start executing with the same processing data, e.g. when comparing a particular data block with many other data blocks then the particular data block is always loaded first.

Various possibilities exist for signaling the due time for the command and program data, but are not shown in Fig.5. In any case, according to According to the invention, the processing data for the first program instruction(s) coming from the ring buffer DB are available in the processing unit 69 when the execution of the program data provided by the means 68 for providing program data starts. Thus, idle cycles for data loading as known from prior art can largely be prevented. In one embodiment, the processing unit 69 contains or can access a defined register or set of registers PL (pre-load registers) that holds the processing data items required by the first (and second, etc.) instruction.

As a consequence of the described ring buffering process, the physical start address of stored processing data within the ring buffer DB is variable. According to one aspect of the invention, virtual memory mapping is used. The program data contain virtual addresses for processing data within the ring buffer DB, which are relative addresses. These are translated by a hardware unit VPA into absolute physical addresses of the ring buffer. The hardware unit BM may have separate registers for holding the physical base addresses of the processing data for currently executed programs, and an address mapping unit VPA for mapping virtual to physical addresses. A particular fixed virtual address value, e.g. zero, is mapped to the respective base address of a program.

Though this example shows the ring buffer DB being only used for reading data, the method can also be used when the ring buffer is used for writing data.

Generally, a ring buffer includes a linear buffer, e.g. with addresses 00ₕₑₓ-FFₕₑₓ, and address control circuitry that provides a write pointer and a read pointer, wherein increasing the read pointer or write pointer above the maximum value FFₕₑₓ leads to a wrap-around or turn-over, i.e. the next value after FFₕₑₓ is 00ₕₑₓ, or in other words the beginning of the buffering area is virtually appended to the end of the buffering area. Thus the lowest and the highest possible values are neighbors, so that if the highest possible address is incremented then the lowest possible address results, and if the lowest possible address is decremented then the highest possible address results. This technique eliminates the physical limits of the virtual address space.

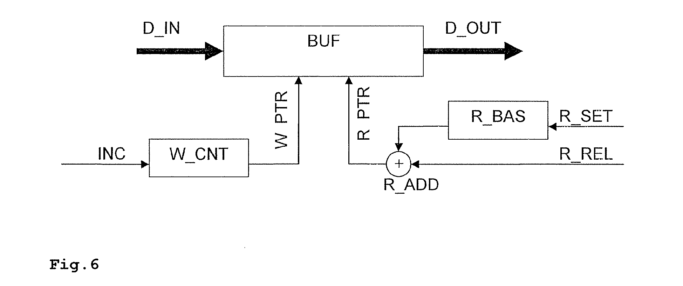

The above-described ring buffer is shown in more detail in Fig.6 (for single base address). A ring buffering device according to the invention comprises buffering means BUF comprising addressable storage elements, read address and write address inputs, data input D_IN and data output D_OUT, means W_CNT for holding and incrementing a current write address W_PTR and applying the current write address to the write address input D_IN of the buffering means, wherein the incrementing uses wrap-around, means R_BAS for providing a base address for reading, which may be set to a given base address R_SET, and means R_ADD for calculating a physical read address R_PTR. In principle, a sum of an input relative read address R_REL and the base address provided by the means R_BAS for providing a base address is calculated, mapped into the valid address space using e.g. the above-mentioned modulo operation (thus implementing wrap-around) and applied as physical read address R_PRT to the read input of the buffering means BUF.

The ring buffer may further comprise a separate means for determining the base address for the following program while a current program is executed, wherein said base address for the following program is generated based on the length of the processing data of the currently processed program.

Advantageously, the start address for the processing data of a next program can easily be determined, since in one embodiment of the invention these data follow directly after the processing data of the previous program. Another advantage is that successive de-allocated buffer area of different terminated programs adds up to a new free buffer area. As a further advantage, a program running on the described architecture may use direct addressing and fixed addresses to access its data, since the memory addressing circuitry adds an individual offset to all read addresses for each program.

In the exceptional case that the process data of the next program are not present in the ring buffer at the time when a current program ends, an adopted program dispatcher can be used for determining different entry points as start address for the next program, depending on the required process data being already available or not.

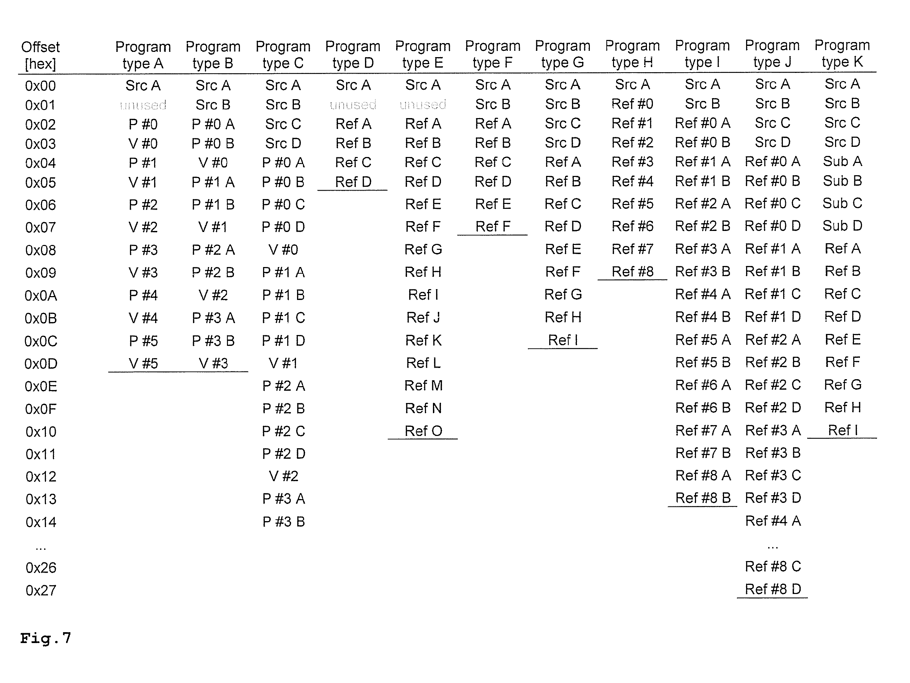

Fig.7 shows exemplary programs used for block matching as part of image processing. The process data blocks required for executing the programs are loaded from an external memory and put into a ring buffer that can be accessed quickly, e.g. external SRAM. For example, a first command of type B requires a first pixel block (at addresses 0x00 and 0x01) and several search blocks (at addresses 0x02 to 0x0D) each with 8x16 pixels. The search block is compared with subblocks of the reference block at different positions. At each position, a distortion value, e.g. sum of absolute differences (SAD), between respective pixels is generated by simultaneously processing all pixels of a search block in parallel, and then the position with the minimum distortion is selected as best match.

A number of different operations are available (eleven in this example). Each of them is represented by a single program, as exemplarily listed in Fig.7. These programs have therefore different lengths, in terms of the amount of processing data and also in terms of number of instructions (and therefore also the number of cycles that need to be executed). Each program executes one instruction per cycle and requires at least one cycle for initial loading of processing data, which is in this example the pixel data of a source block.

An identifier for the processing data block required for a particular instruction is provided by a program written by a programmer and stored in the program memory. Because of the variable length of processing data for the programs, the ring buffer addresses are variable, so that it is not possible to have actual ring buffer addresses in the program code. Therefore in conventional circuitry indirect addressing is used, which requires an extra command for translating the relative address of the program to the actual address of the ring buffer. For example, a conventional instruction could be RD(GPR), which means "read at an address that is stored in the register GPR". Therefore a first step is to look up the address in the register GPR, and then perform the actual reading at this address. With the ring buffer of the invention, the instruction can be RD(0), which means "read at the address 0" and is interpreted and executed as "read at the address (0+base address of current program)" and therefore requires no extra processing cycle, since the addition of the base address is done by a hardware adder. Therefore the programmer needs not take care of virtual address mapping, which makes programming and program verification easier and reduces program error probability.

The invention is advantageous for buffering elements within processing architectures, wherein the buffering elements are used for providing processing data to a program controlled processing unit, and in particularly for image processing circuitry within video encoders.

## Claims

1. Device for sequentially processing a plurality of programs on a hardware processing unit, wherein the sequence order of the plurality of programs is not deterministic and wherein the programs require individual amounts of processing data to be processed, the device comprising
- means (61) for providing a command identifying a program of the plurality of programs;
- means (62) for determining for the identified program the required processing data according to the command;
- means (63) for providing the determined processing data;
- means (68) for determining and reading a program corresponding to the command;
- first buffer (CB) for buffering the provided command or the program corresponding to the command;
- means (67) for reading from the first buffer a command or a program to be processed;
- second buffer (DB) for buffering the provided processing data;
- means (BM) for retrieving from the second buffer the processing data that correspond to the command that was read, or to its program instructions or to the program instructions that were read; and
- means (69) for processing said processing data according to said program instructions,
wherein the second buffer (DB) for the processing data is a ring buffer and wherein the means (BM) for retrieving the processing data from the second buffer comprises
- means (VPA) for associating virtual buffer read addresses received from the processing unit (69) with physical read addresses, wherein the physical buffer read addresses are applied to the second buffer (DB).

2. Device according to claim 1, wherein the means (VPA) for associating virtual buffer addresses with physical address is a hardware means.

3. Device according to claim 1 or 2, wherein the means (BM) for retrieving from said second buffer the processing data that correspond to the command retrieves an initial portion of said processing data before the first instruction corresponding to the read command arrives at the processing unit (69).

4. Device according to the previous claim, further comprising means (PL) for storing the initial portion of said processing data.

5. Device according to claim 3 or 4, further comprising means for reading from the second buffer (DB) an initial portion of processing data for the next program according to a reference value received from the means (67) for reading from the first buffer a command to be processed.

6. Device according to claim 3 or 4, further comprising means for reading from the second buffer (DB) an initial portion of processing data for the next program according to the maximum address of the current program.

7. Device according to one of the previous claims, wherein the means (VPA) for associating virtual buffer addresses with physical address performs a modulo operation (R_ADD) on the virtual addresses provided by the processing unit (69) to obtain the physical buffer addresses (R_PTR), wherein the value (R_BAS) remains constant within each program.

8. Device according to one of the previous claims, further comprising means for determining that the contiguous free buffer area after the data for the last loaded program is sufficient, wherein loading the next processing data is only performed if the contiguous free buffer area after the data for the last loaded program is sufficient.

9. Method for sequentially processing a plurality of programs on a hardware processing unit, wherein the sequence order of the plurality of programs is not deterministic and wherein the programs require individual amounts of processing data to be processed, the method comprising the steps of
- providing (61) a command identifying a program of the plurality of programs;
- determining (62) for the identified program the required processing data according to the command;
- providing (63) the determined processing data;
- determining and reading (68) a program corresponding to the command;
- buffering in a first buffer (CB) the provided command or the program corresponding to the command;
- reading (67) from the first buffer a command to be processed;
- buffering in a second buffer (DB) the provided processing data;
- retrieving (BM) from the second buffer the processing data that correspond to the command that was read, or to its program instructions or to the program instructions that were read; and
- processing (69) the read processing data according to said program instructions,
wherein the second buffer (DB) for the processing data is a ring buffer and wherein the step of retrieving (BM) the processing data from the second buffer comprises
- associating (VPA) virtual buffer read addresses received from the processing unit (69) with physical read addresses, wherein the physical buffer read addresses are applied to the second buffer (DB).

10. Method according to claim 9, wherein said retrieving (BM) from said second buffer the processing data that correspond to the command comprises retrieving an initial portion of said processing data before the first instruction corresponding to the read command arrives at the processing unit (69).
